# EUROPEAN PATENT APPLICATION

(11) **EP 2 680 675 A1**
(43) Date of publication of application: **01.01.2014**
(21) Application number: 13003092.7
(22) Date of filing: 17.06.2013
(51) Int. Cl.: H05B 37/02

(54) **Lighting system**

(30) Priority: 26.06.2012 JP 2012143169
(71) Applicant: Panasonic Corporation, Kadoma-shi Osaka 571-8501 (JP)
(72) Inventor: Hidaka, Yuto, Osaka, 540-6207 (JP); Nanahara, Atsuo, Osaka, 540-6207 (JP)
(74) Representative: Müller-Boré & Partner Patentanwälte

(57) **Abstract**

The lighting system includes a plurality of lighting devices. Each lighting device includes a light source, an image sensor configured to take an image of a predetermined area, an image processing unit configured to detect presence of a person in the image taken by the image sensor, and a control unit configured to control a light output of the light source in accordance with a detection result produced by the image processing unit. The image sensor of each lighting device is installed in such a manner to have an imaging area which includes at least a part of a lighting area of a particular lighting device out of the other lighting devices. Each lighting device is configured to, upon acknowledging that the image processing unit has detected a change in the light output of the particular lighting device in the image taken by the image sensor, light the light source.

## Description

### Technical Field

The present invention relates to lighting systems.

### Background Art

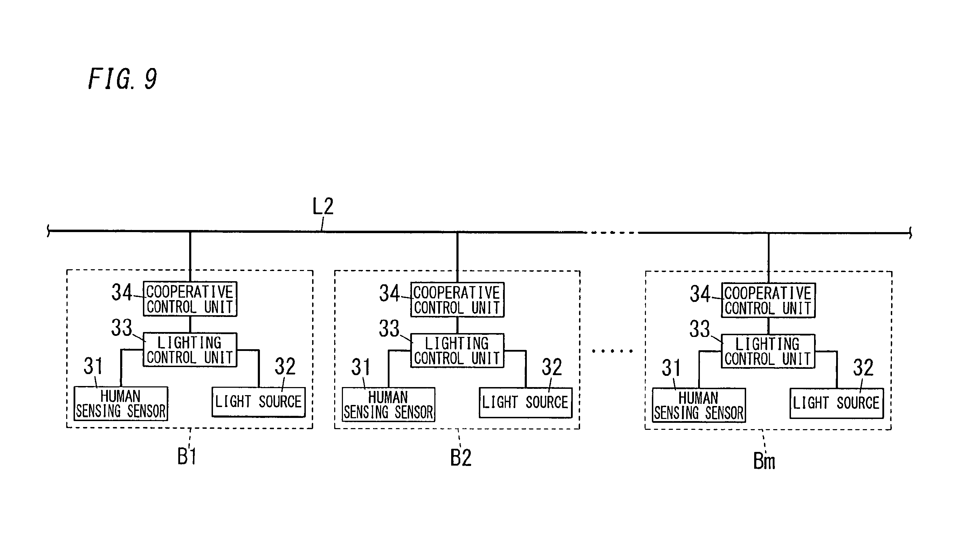

To date, there have been provided lighting systems including a plurality of lighting devices connected to each other through a transmission line. FIG. 9 is a diagram showing an example thereof. Each lighting device Bm (m = 1, 2, ...) includes a human sensing sensor 31 such as a pyroelectric sensor or an image sensor, a light source 32, a lighting control unit 33 which controls a light output of the light source 32, and a cooperative control unit 34 which performs cooperation control with another lighting device Bm. These lighting devices Bm are connected to each other through a transmission line L2.

In this lighting system, when the human sensing sensor 31 of any of the lighting devices Bm has detected a person, the lighting control unit 33 thereof having received a detection signal from the human sensing sensor 31 lights the light source 32 thereof and transmits, to an adjacent lighting device Bm, a control signal for lighting the light source 32 of the adjacent lighting device Bm. Then, the adjacent lighting device Bm lights its light source 32 in accordance with the received control signal.

Further, there has also been provided a lighting control system (see, for example, Japanese Laid-Open Patent Publication No. 2002-75668; hereinafter referred to as Patent Literature 1) which obtains luminance data of a floor surface, and controls light outputs of respective lighting devices based on the obtained luminance data. In this lighting control system, a plurality of lighting devices and a lighting control device which controls these lighting devices are connected to each other through electric wires, and the lighting control device controls a light output of each lighting device based on luminance data of the floor surface obtained from image data obtained by image pickup means.

In the lighting system shown in FIG. 9 above, when a human sensing sensor 31 has detected a person, the light sources 32 of the respective adjacent lighting devices Bm are lit in a cooperative manner. However, the lighting devices Bm have to be connected to each other through the transmission line L2, and thus, installation thereof requires time and work. In addition, in the lighting control system shown in Patent Literature 1 above, luminance data of the floor surface is obtained, and a light output of each lighting device is controlled based on this luminance data. Therefore, the lighting control system has to be used in a place which external light and light from a lighting device not to be controlled by the lighting system do not enter, and thus, an installation place therefor is limited.

### Summary of Invention

The present invention has been made in view of the above problems. An object of the present invention is to provide a lighting system capable of being installed in a desired installation place and of facilitating installation thereof.

A lighting system of the present invention includes: a plurality of lighting devices, each of the lighting devices including: a light source; an image sensor configured to take an image of a predetermined area; an image processing unit configured to detect presence of a person in the image taken by the image sensor; and a control unit configured to control a light output of the light source in accordance with a detection result produced by the image processing unit. The image sensor of each of the lighting devices is installed in such a manner to have an imaging area which includes at least a part of a lighting area of a particular lighting device out of the other lighting devices, and each of the lighting devices is configured to, upon acknowledging that the image processing unit has detected a change in the light output of the particular lighting device in the image taken by the image sensor, light the light source.

In this lighting system, it is preferable that each of the lighting devices is configured to, upon acknowledging that the change in the light output of the particular lighting device detected by the image processing unit is not lower than a predetermined threshold, light the light source at a dimming rate lower than that used in a situation where the image processing unit has detected a person.

Further in this lighting system, it is also preferable that each of the lighting devices is configured to, upon acknowledging that the change in the light output of the particular lighting device detected by the image processing unit is lower than a predetermined threshold, light the light source at a lowest dimming rate that allows the image sensor to detect a person.

Further, in this lighting system, it is also preferable that the image taken by the image sensor includes a first region defined as a region close to the image sensor and a second region defined as a region far from the image sensor, each of the lighting devices is configured to, upon acknowledging that a person is detected in the first region or the second region in a situation where no person has been detected, light the light source at a predetermined dimming rate, and each of the lighting devices is configured to, upon acknowledging that position coordinates of the person detected by the image processing unit have moved from the first region to the second region, decrease the dimming rate for the light source to be lower than the predetermined dimming rate.

Further, in this lighting system, it is also preferable that each of the lighting devices is configured to, upon acknowledging that the position coordinates have moved from the second region to the first region, set the dimming rate for the light source to the predetermined dimming rate.

Further, in this lighting system, it is also preferable that each of the lighting devices is configured to, upon acknowledging that the image processing unit has detected a change in the light output of the particular lighting device and has detected a person, light the light source at a highest dimming rate out of the dimming rates selected in accordance with the detection result.

### Brief Description of the Drawings

FIG. 1 is a diagram showing an example of a lighting system of the present embodiment;
FIG. 2 shows a schematic diagram (a) illustrating an installation example of the above lighting system, and a schematic diagram (b) illustrating an example of operations performed by the above lighting system;
FIG. 3 shows schematic diagrams (a) to (c) illustrating another example of operations performed by the above lighting system;
FIG. 4 shows schematic diagrams (a) to (c) illustrating still another example of operations performed by the above lighting system;
FIG. 5 shows schematic diagrams (a) to (c) illustrating a series of operations performed by the above lighting system;
FIG. 6 shows schematic diagrams (a) to (c) illustrating a series of operations performed by the above lighting system;
FIG. 7 shows schematic diagrams (a) to (c) illustrating a series of operations performed by the above lighting system;
FIG. 8 shows schematic diagrams (a) and (b) illustrating still another example of operations performed by the above lighting system; and
FIG. 9 is a diagram illustrating an example of a conventional lighting system.

### Description of Embodiments

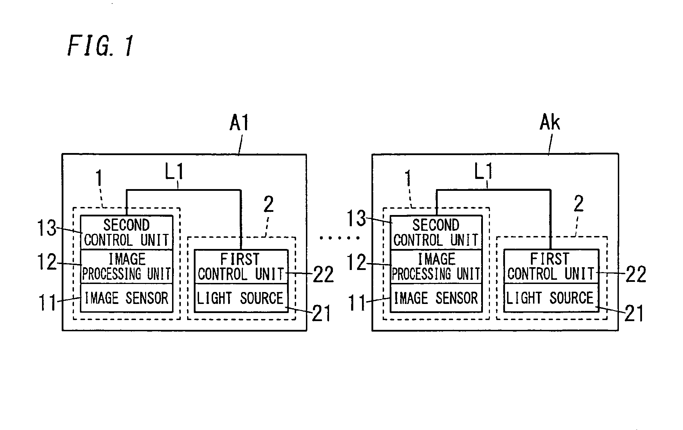

Hereinafter, an embodiment of a lighting system will be described with reference to FIG. 1 to FIG. 8.

FIG. 1 is a diagram showing an example of a lighting system of the present embodiment. The lighting system includes a plurality of lighting devices Ak (k = 1, 2, ...) each including a sensor unit 1 and a light source unit 2.

As shown in FIG. 1, the sensor unit 1 includes an image sensor 11 configured to take an image of a predetermined area, an image processing unit 12 configured to detect presence of a person in the image taken by the image sensor 11, and a second control unit 13.

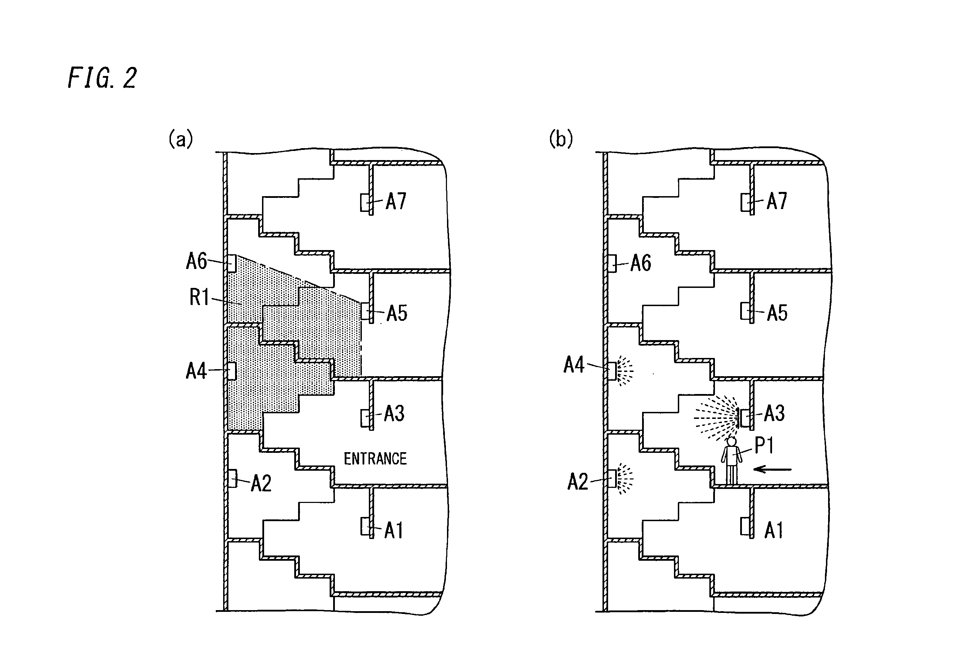

The image sensor 11 is integrally constituted by a solid state image pickup device (e.g., a CCD and CMOS image sensor), an optical lens, and a signal processing circuit. As shown in FIG. 2 (a), the image sensor 11 of one of the lighting device Ak is installed in such a manner to have an imaging area which includes at least a part of a lighting area of a particular lighting device Ak out of the other lighting devices Ak. The image sensor 11 outputs obtained image data to the image processing unit 12. The image processing unit 12 detects presence of a person based on the image data inputted from the image sensor 11. When having detected a person, the image processing unit 12 determines a set of coordinates of a position of the person, and outputs the determined set of coordinates of the position to the second control unit 13. The second control unit 13 determines a dimming rate for a light source 21 described below based on the detection result and the set of coordinates of the position inputted from the image processing unit 12, and outputs the determined dimming rate to a first control unit 22 described below through a transmission line L1.

As shown in FIG. 1, the light source unit 2 includes the light source 21 (such as LED), and the first control unit 22 configured to control a light output of the light source 21. In response to reception of the dimming rate for the light source 21 through the transmission line L1 from the second control unit 13, the first control unit 22 generates a control signal based on the received dimming rate, and outputs the generated control signal to the light source 21, thereby lighting the light source 21 at a dimming level corresponding to the dimming rate. Here, in the present embodiment, the first control unit 22 and the second control unit 13 constitute a control unit.

FIG. 2 (a) is a schematic diagram showing an installation example of the lighting system. In the present embodiment, the lighting devices Ak are installed on respective floors in a stairs area. The image sensor 11 of each lighting device Ak is installed in such a manner to have the imaging area which includes at least a part of the lighting area of the lighting device Ak installed on an upper floor or a lower floor relative to a floor on which the corresponding lighting device Ak is installed. For example, with respect to the image sensor 11 of the lighting device A5, the imaging area R1 thereof is set so as to include at least a part of the lighting area of the lighting device A6 installed on the upper floor relative to the floor where the lighting device A5 is installed and at least a part of the lighting area of the lighting device A4 installed on the lower floor relative to the floor where the lighting device A5 is installed. Then, the image processing unit 12 of the lighting device A5 is configured to detect changes in light outputs of the respective lighting devices A4 and A6 and whether or not a person exists, with regard to the image taken by the image sensor 11.

Next, basic operations performed by the lighting system will be described with reference to FIG. 2 (b). When a person P1 enters the floor of the stairs area where the lighting device A3 is installed, the image processing unit 12 of the lighting device A3 detects the person P1, and lights the light source 21 thereof at the dimming rate of 100 % selected in accordance with the detection result. At this time, with regard to each of the lighting device A4 installed on the upper floor relative to the floor where the lighting device A3 is installed and the lighting device A2 installed on the lower floor relative to the floor where the lighting device A3 is installed, the image processing unit 12 detects a change in the light output of the lighting device A3 and calculates a detection value representing an amount of the change. Since the detection value is not lower than a predetermined threshold, each of the lighting devices A2 and A4 lights its light source 21 at the dimming rate of 60 % which is lower than that used in a situation where the person P1 is detected. Further, at this time, with regard to the lighting device A1 installed on the lower floor relative to the floor where the lighting device A2 is installed and the lighting device A5 installed on the upper floor relative to the floor where the lighting device A4 is installed, the image processing units 12 of the lighting devices A1 and A5 detect changes in the light outputs of the lighting devices A2 and A4, respectively. Since each detection value is lower than a predetermined threshold, each of the lighting devices A1 and A5 lights its light source 21 at the lowest dimming rate (25 %) that allows the image sensor 11 to detect a person. Further, at this time, with regard to each of the lighting devices A6 and A7, the image processing unit 12 has detected neither the person P1 nor a change in the light output of another lighting device Ak, and thus, each of the lighting devices A6 and A7 lights its light source 21 at the dimming rate of 25 %.

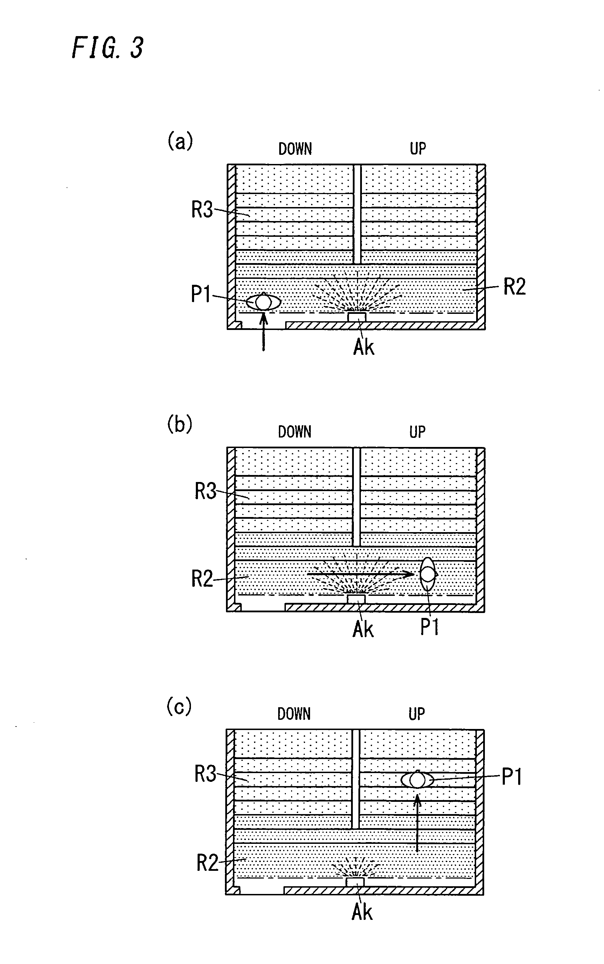

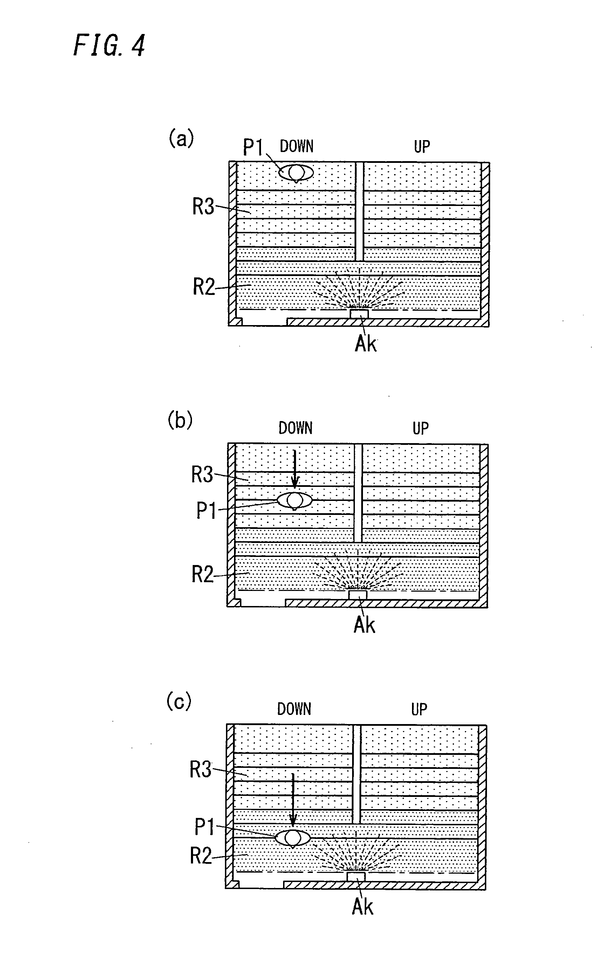

Further, in the present embodiment, as shown in FIG. 3 and FIG. 4, an image taken by the image sensor 11 of each lighting device Ak is divided into a first region R2 (region close to the light source 21) including a floor part and a portion of a stairs part connected to the floor part, and a second region R3 (region far from the light source 21) including the remaining stairs part excluding the above portion of the stairs part included in the first region R2. The dimming rate for the light source 21 is changed in accordance with movement of the person P1. For example, as shown in FIG. 3 (a), when the person P1 enters the stairs section through an entrance, the image processing unit 12 detects the person P1 in the first region R2, and the light source 21 is lit at the dimming rate of 100 %. Next, as shown in FIG. 3 (b), when the person P1 moves rightward in the first region R2, since this movement is performed within the same first region R2, the light source 21 remains lit at the dimming rate of 100 %. Then, as shown in FIG. 3 (c), when the person P1 moves from the first region R2 to the second region R3, the image processing unit 12 determines that the person P1 is moving in a direction away from the lighting device Ak, and the second control unit 13 decreases the dimming rate of the light source 21 to 60 %. As a result, the light source 21 is lit at the dimming rate of 60 %. It should be noted that, when a person moves from the second region R3 to the first region R2 again, the light source 21 is lit at the dimming rate used in a situation where the person P1 is detected, that is, at the dimming rate of 100 %.

Further, as shown in FIG. 4 (a), when the person P1 enters the stairs section from an upper floor or a lower floor, the image processing unit 12 detects the person P1 in the second region R3 and the light source 21 is lit at the dimming rate of 100 %. Next, when the person P1 moves in the second region R3 as shown in FIG. 4 (b), and then further moves from the second region R3 to the first region R2 as shown in FIG. 4 (c), the image processing unit 12 determines that the person P1 is moving in a direction approaching the lighting device Ak, and the second control unit 13 sets the dimming rate for the light source 21 to the dimming rate used in a situation where the person P1 is detected, that is, the dimming rate of 100 %. As a result, the light source 21 remains lit at the dimming rate of 100 %.

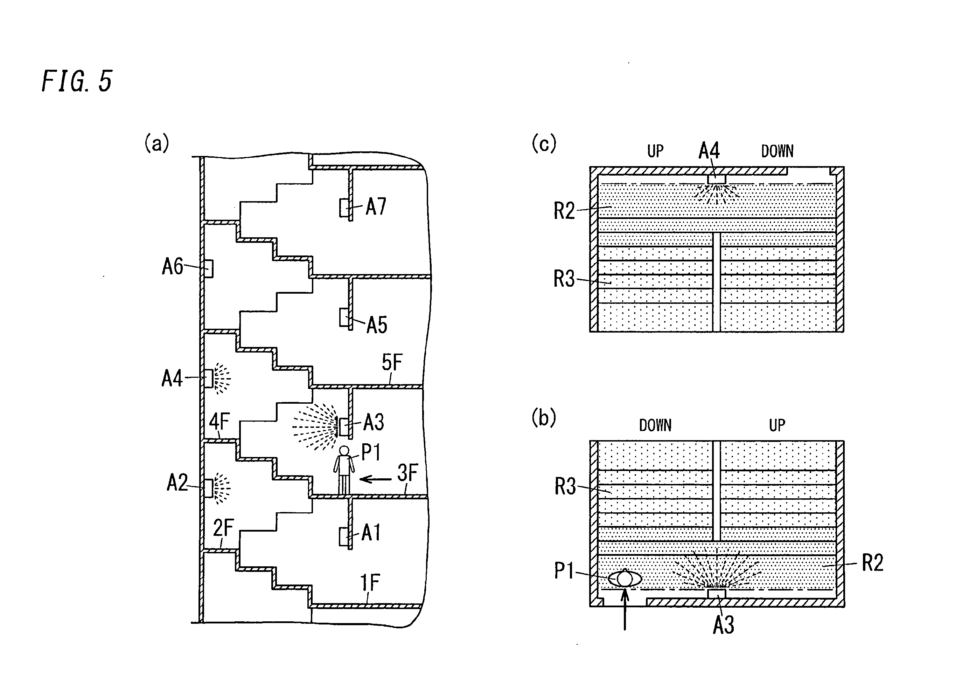

Next, a series of operations performed by the lighting system will be described with reference to FIG. 5 to FIG. 7. As shown in FIG. 5 (a) and FIG. 5 (b), when the person P1 enters the first region R2 in the imaging area of the image sensor 11 of the lighting device A3 installed on the third floor, the image processing unit 12 of the lighting device A3 detects the person P1 and the light source 21 thereof is lit at the dimming rate of 100 %. At this time, as described above, with regard to the lighting device A4 installed on the upper floor (the fourth floor) relative to the floor where the lighting device A3 is installed and the lighting device A2 installed on the lower floor (the second floor) relative to the floor where the lighting device A3 is installed, a change in the light output of the lighting device A3 is detected, and each light source 21 is lit at the dimming rate of 60 % (see FIG. 5 (c)). Further, at this time, as shown in FIG. 5 (c), the person P1 has not entered the imaging area of the image sensor 11 of the lighting device A4 installed on the fourth floor, and similarly, has not entered the imaging area of the image sensor 11 of the lighting device A2 installed on the second floor.

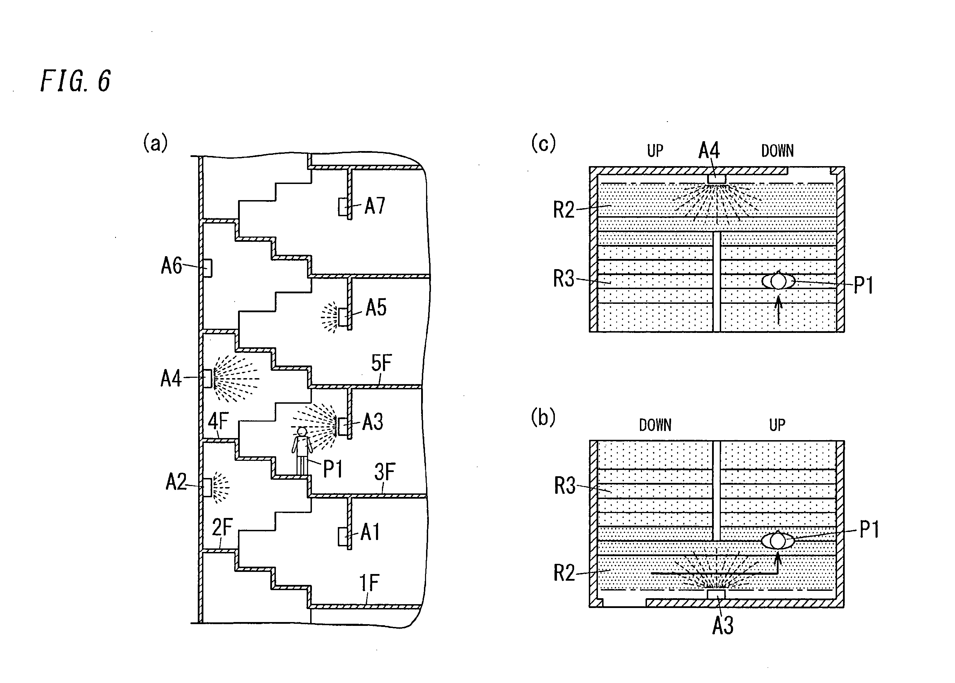

Subsequently, as shown in FIG. 6 (a) to FIG. 6 (c), in a situation where the person P1 has begun ascending the stairs from the third floor to the fourth floor, the person P1 has merely moved within the first region R2 in the imaging area of the image sensor 11 of the lighting device A3. Therefore, the light source 21 of the lighting device A3 remains lit at the dimming rate of 100 %. Further, at this time, since the person P1 is detected in the second region R3 in the imaging area of the image sensor 11 of the lighting device A4, the light source 21 of the lighting device A4 is lit at the dimming rate of 100 %. Further, at this time, in the lighting device A5 installed on the upper floor (the fifth floor) relative to the floor where the lighting device A4, the image processing unit 12 detects a change in the light output of the lighting device A4. Since this detection value is not lower than the predetermined threshold, the light source 21 of the lighting device A5 is lit at the dimming rate of 60%.

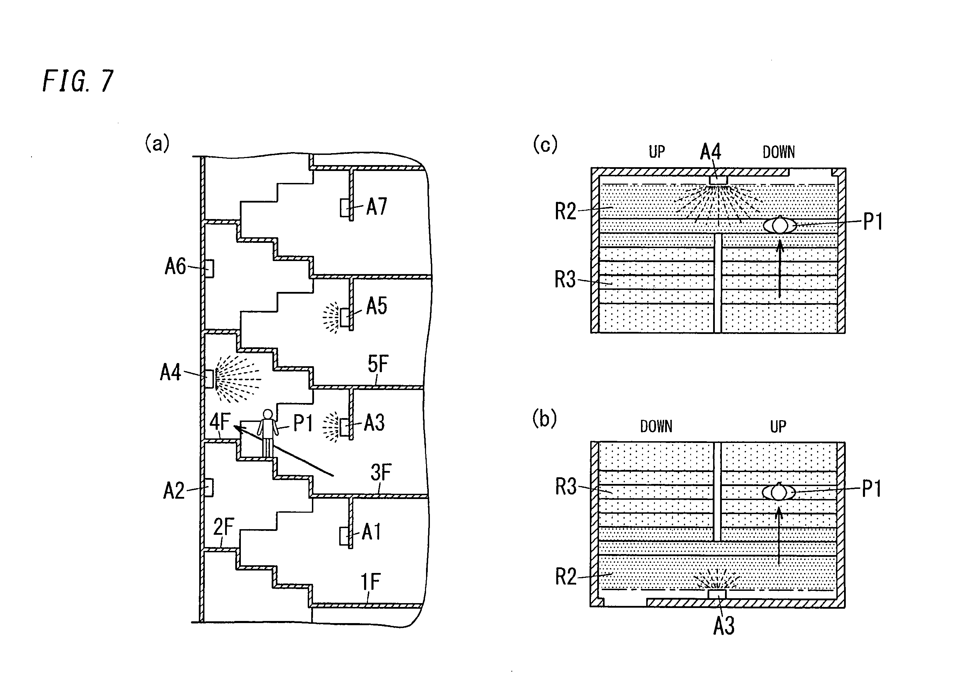

Thereafter, as shown in FIG. 7 (a) to FIG. 7 (c), when the person P1 further ascends the stairs, in the lighting device A3, the image processing unit 12 detects that the person P1 has moved from the first region R2 to the second region R3, and the second control unit 13 decreases the dimming rate for the light source 21 to 60 %. As a result, the light source 21 of the lighting device A3 is lit at the dimming rate of 60 %. Further, at this time, in the lighting device A4, the image processing unit 12 detects that the person P1 has moved from the second region R3 to the first region R2, and the second control unit 13 maintains the dimming rate for the light source 21 at 100 %. As a result, the light source 21 of the lighting device A4 remains lit at the dimming rate of 100 %. Further, at this time, since the dimming rate for the light source 21 of the lighting device A3 has been decreased to 60 %, a change in the light output of the lighting device A3 detected by the image processing unit 12 of the lighting device A2 becomes lower than the predetermined threshold, and thus, the light source 21 of the lighting device A2 is lit at the dimming rate of 25 %.

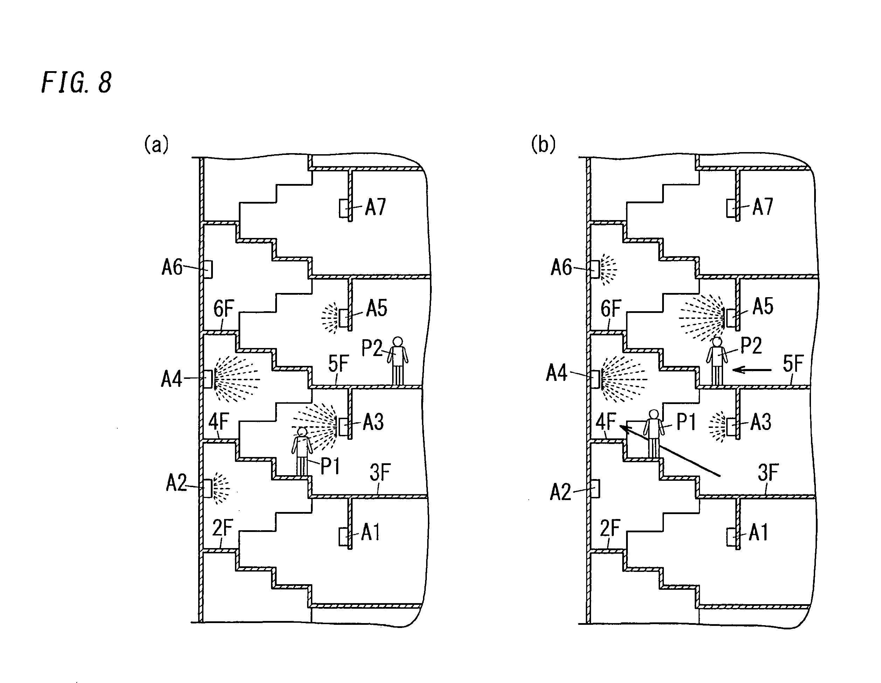

Next, operations performed when the image processing unit 12 of the lighting device Ak has detected a change in the light output of another lighting device Ak and has detected the person P1 will be described with reference to FIG. 8. As shown in FIG. 8 (a), when the image processing unit 12 of the lighting device A3 installed on the third floor has detected the person P1, the light source 21 of the lighting device A3 is lit at the dimming rate of 100 %. Further, at this time, in the lighting device A4 installed on the upper floor (the fourth floor) relative to the floor where the lighting device A3, the image processing unit 12 has detected a change in the light output of the lighting device A3 and has detected the person P1. Therefore, the light source 21 of the lighting device A4 is lit at the dimming rate of 100 % identical to the dimming rate used in a situation where the person P1 is detected. Further, at this time, with regard to the lighting device A2 installed on the lower floor (the second floor) relative to the floor where the lighting device A3 and the lighting device A5 installed on the upper floor (the fifth floor) relative to the floor where the lighting device A4, changes in the light outputs of the lighting devices A3 and A4 have been detected, respectively. Since each of the detection values is not lower than the predetermined threshold, the lighting devices A2 and A5 light their light sources 21 at the same dimming rate of 60 %.

As shown in FIG. 8 (b), when the person P1 ascends the stairs from the third floor to the fourth floor and approaches the lighting device A4, in the lighting device A3, the light source 21 is lit at the dimming rate of 60 % since the person P1 has moved from the first region R2 to the second region R3 in the imaging area of the image sensor 11. Further at this time, in the lighting device A4, the light source 21 remains lit at the dimming rate of 100 % since the person P1 has moved from the second region R3 to the first region R2 in the imaging area of the image sensor 11.

Further, at this time, when a person P2 moves and is detected by the image processing unit 12 of the lighting device A5, in the lighting device A5, the light source 21 is lit at the dimming rate of 100 % equal to the dimming rate used in a situation where the person P2 is detected, since the image processing unit 12 has detected a change in the light output of the lighting device A4 and has detected the person P2. Further, at this time, in the lighting device A6 installed on the upper floor (the sixth floor) relative to the floor where the lighting device A5, the light source 21 is lit at the dimming rate of 60 %, since the image processing unit 12 of the lighting device A6 has detected a change in the light output of the lighting device A5 and the detection value is not lower than the predetermined threshold.

Therefore, according to the present embodiment, each lighting device Ak can determine, by detecting a change in the light output of the particular lighting device Ak out of the other lighting devices Ak, the state of the particular lighting device Ak even in a place receiving external light and light from a lighting device not to be controlled by the lighting system. Thus, the installation place for the lighting system is not limited. In addition, when the lighting device Ak detects a change in the light output of the particular lighting device Ak out of the other lighting devices Ak, the light source 21 of the lighting device Ak that has detected the change can be lit in a cooperative manner with the particular lighting device Ak. Further, unlike conventional examples, since the lighting devices Ak need not be connected with each other through a transmission line, the present invention is also advantageous in that installation thereof can be facilitated.

Further, when a change in the light output of the particular lighting device Ak detected by the image processing unit 12 of the lighting device Ak is not lower than the predetermined threshold, the light source 21 of the lighting device Ak that has detected the change is lit at a given dimming rate. Hence, a space around the person P1 can be illuminated before the person P1 reaches the space. Consequently, it is possible to improve visibility and thus, safety. Further, when a change in the light output of the particular lighting device Ak detected by the image processing unit 12 of the lighting device Ak is lower than the predetermined threshold, the light source 21 of the lighting device Ak that has detected the change is lit at the lowest dimming rate that allows the image sensor 11 thereof to detect the person P1. Accordingly, it is possible to reduce power consumption yet successful detection of the person P1 entering the imaging area of the image sensor 11 is enabled.

Further, when the person P1 has moved from the first region R2 to the second region R3, it is determined that the person P1 is moving in a direction away from the light source 21 and the dimming rate is decreased. Hence, it is possible to reduce power consumption yet the visibility is secured. Further, when the person P1 has moved from the second region R3 to the first region R2, it is determined that the person P1 is moving in a direction approaching the light source 21 and the dimming rate is set to the dimming rate (100 %) identical to the dimming rate used in a situation where the person P1 is detected. Hence, the visibility can be maintained. Further, upon detecting a change in the light output of the particular lighting device Ak and the person P1, the lighting device Ak lights the light source 21 at the highest dimming rate out of the dimming rates selected in accordance with the detection result. Accordingly, illuminance necessary for securing the visibility can be always maintained.

In the present embodiment, in each lighting device Ak, the sensor unit 1 and the light source unit 2 are provided as separate units and are connected to each other through the transmission line L1. However, the sensor unit and the light source unit may be provided as a single unit, and is not limited to the instance illustrated in the present embodiment.

## Claims

1. A lighting system comprising:
a plurality of lighting devices,
each of the lighting devices including:
a light source;
an image sensor configured to take an image of a predetermined area;
an image processing unit configured to detect presence of a person in the image taken by the image sensor; and
a control unit configured to control a light output of the light source in accordance with a detection result produced by the image processing unit,
wherein
the image sensor of each of the lighting devices is installed in such a manner to have an imaging area which includes at least a part of a lighting area of a particular lighting device out of the other lighting devices, and
each of the lighting devices is configured to, upon acknowledging that the image processing unit has detected a change in the light output of the particular lighting device in the image taken by the image sensor, light the light source.

2. The lighting system according to claim 1, wherein
each of the lighting devices is configured to, upon acknowledging that the change in the light output of the particular lighting device detected by the image processing unit is not lower than a predetermined threshold, light the light source at a dimming rate lower than that used in a situation where the image processing unit has detected a person.

3. The lighting system according to claim 1, wherein
each of the lighting devices is configured to, upon acknowledging that the change in the light output of the particular lighting device detected by the image processing unit is lower than a predetermined threshold, light the light source at a lowest dimming rate that allows the image sensor to detect a person.

4. The lighting system according to claim 1, wherein
the image taken by the image sensor includes a first region defined as a region close to the image sensor and a second region defined as a region far from the image sensor,
each of the lighting devices is configured to, upon acknowledging that a person is detected in the first region or the second region in a situation where no person has been detected, light the light source at a predetermined dimming rate, and
each of the lighting devices is configured to, upon acknowledging that position coordinates of the person detected by the image processing unit have moved from the first region to the second region, decrease the dimming rate for the light source to be lower than the predetermined dimming rate.

5. The lighting system according to claim 4, wherein
each of the lighting devices is configured to, upon acknowledging that the position coordinates have moved from the second region to the first region, set the dimming rate for the light source to the predetermined dimming rate.

6. The lighting system according to any one of claims 2 to 5, wherein
each of the lighting devices is configured to, upon acknowledging that the image processing unit has detected a change in the light output of the particular lighting device and has detected a person, light the light source at a highest dimming rate out of the dimming rates selected in accordance with the detection result.
